# EUROPÄISCHE PATENTSCHRIFT

(11) **EP 0 940 343 B1**
(45) Veröffentlichungstag und Bekanntmachung des Hinweises auf die Patenterteilung: **25.01.2006**
(21) Anmeldenummer: 99103177.4
(22) Anmeldetag: 18.02.1999
(51) Int. Cl.: B65B 57/00, F16P 3/08, H01H 9/06

(54) **Maschine, insbesondere Verpackungsmaschine, mit Verkleidung**
Machine, in particular packaging machine, with cover
Machine, en particulier machine d'emballage, avec habillage

(30) Priorität: 05.03.1998 DE 19809246
(43) Veröffentlichungstag der Anmeldung: 08.09.1999
(73) Patentinhaber: Focke & Co. (GmbH & Co. KG), 27283 Verden (DE)
(72) Erfinder: Focke, Heinz, 27283 Verden (DE); Lübbehüsen, Jörg, 27336 Retham (DE)
(74) Vertreter: Bolte, Erich

(56) Entgegenhaltungen:
- EP-A- 0 580 464
- EP-A- 0 606 560
- WO-A-96/35851
- DE-A- 19 527 207
- DE-U- 9 200 599
- US-A- 4 876 422

## Beschreibung

Die Erfindung betrifft eine Maschine, insbesondere Verpackungsmaschine, bei der mindestens Teilbereiche mit einer äußeren Verkleidung versehen sind, wobei die Verkleidung abnehmbare bzw. in eine Öffnungsstellung bewegbare Verkleidungsteile aufweist, insbesondere Türen, Hauben und/oder Klappen, die den Zugang zu Teilen der Maschine ermöglichen, und wobei die Verkleidungsteile einen Handgriff aufweisen, mit einem vom Bediener der Maschine zu betätigenden Schaltorgan, welches zum Öffnen der Verkleidungsteile zu betätigen ist und einen Maschinenstopp auslöst, wobei das Schaltorgan beim Erfassen des Handgriffs betätigbar ist.

Verpackungsmaschinen, aber auch andere Maschinen, bestehen aus komplexen, zusammenwirkenden Einheiten, Aggregaten und Organen. Die Maschinen bzw. Verpackungsmaschinen sind weitgehend durch eine äußere Verkleidung aus Metall oder Kunststoff abgedeckt. Die Verkleidung hat zum einen Schutzfunktion, da sich mit hoher Geschwindigkeit bewegende Maschinenteile eine Gefahr für das Bedienungspersonal bilden. Zum anderen hat die Verkleidung aber auch die Funktion, den Zutritt von Staub und anderen Verunreinigungen zu den empfindlichen Maschinenteilen zu verhindern.

Für Prüf-, Wartungs- oder Reparaturzwecke ist aber der Zugang zu einzelnen Bereichen der Maschine erforderlich. Zu diesem Zweck ist die Verkleidung an ausgewählten Bereichen mit Türen, Klappen oder abnehmbaren Hauben versehen.

Derartige Maschinen bzw. Verpackungsmaschinen sind weiterhin mit Schaltern zum Anhalten der Maschine bzw. Verpackungsmaschine versehen. Im Bereich eines zentralen Bedienpults ist einerseits ein Schalter für einen Maschinenstopp vorgesehen. Weiterhin ist ein Notaus-Schalter vorgesehen, der bei ernsthafter Gefahr für Personen oder für die Maschine betätigt wird. Bei einem üblichen Maschinenstopp wird die Maschine nach mehreren Takten bzw. innerhalb eines Zeitraums von wenigen Sekunden (2 bis 3 Sekunden) angehalten. Bei einem Notstopp kommt die Maschine in weniger als 1 Sekunde zum Stillstand. Das Anhalten einer komplexen Maschine in so kurzer Zeit ist allerdings mit erheblichen Belastungen und Verschleißerscheinungen an der Maschine verbunden.

Aus der EP 606 560 A1 ist eine Tür für eine Schutzkabine einer Werkzeugmaschine bekannt, die Griffstangen zum Öffnen der Tür aufweist. In diese Griffstangen sind Betätigungselemente integriert, die beim Umgreifen der Griffstange niedergedrückt werden und die eine Verriegelung der Tür lösen. Gleichzeitig erfolgt durch das Niederdrücken der Betätigungselemente eine Unterbrechung der Stromzufuhr zur Maschine, wodurch die gesamte Werkzeugmaschine stillgesetzt wird.

Der Erfindung liegt die Aufgabe zugrunde, die Betriebssicherheit der Maschine bzw. Verpackungsmaschine einerseits zu verbessern und andererseits die Belastung der Maschine bei betriebsbedingtem Stopp zu vermindern.

Zur Lösung dieser Aufgabe ist die erfindungsgemäße Maschine, insbesondere Verpackungsmaschine, dadurch gekennzeichnet, dass:
a) der Handgriff bügelförmig ausgebildet ist, mit einer im Wesentlichen U-förmigen Gestalt,
b) die Verkleidungsteile bis zum Stillstand der Maschine in einer Schließstellung verriegelt sind,
c) bei Stillstand der Maschine durch am Handgriff angeordnete Lichtquellen ein für den Bediener sichtbares optisches Signal erzeugbar ist.

Der vor dem Öffnen des betreffenden Teils der Verkleidung zu betätigende Schalter bewirkt einen Maschinenstopp, also ein geregeltes Anhalten der (Verpackungs-)Maschine nach einer Mehrzahl von Maschinentakten. Es wird also kein Notaus der Maschine veranlasst.

Bei einem U-förmig oder winkelförmig ausgebildeten Handgriff ist das Schaltorgan an der Innenseite angeordnet, also dem zu betätigenden Teil der Verkleidung zugekehrt. Damit nicht vorzeitig, nämlich insbesondere vor Erreichen des Maschinenstillstands, gewaltsam versucht wird, die Tür, Klappe oder dergleichen zu öffnen, wird gemäß der Erfindung ein optisches Signal für den Bediener erzeugt, zum Beispiel durch Aufleuchten einer grünen Lichtquelle, die die Freigabe der Verriegelung für die Tür, Klappe oder dergleichen anzeigt.

Weitere Einzelheiten der Erfindung werden nachfolgend anhand eines Ausführungsbeispiels näher erläutert. Es zeigt:

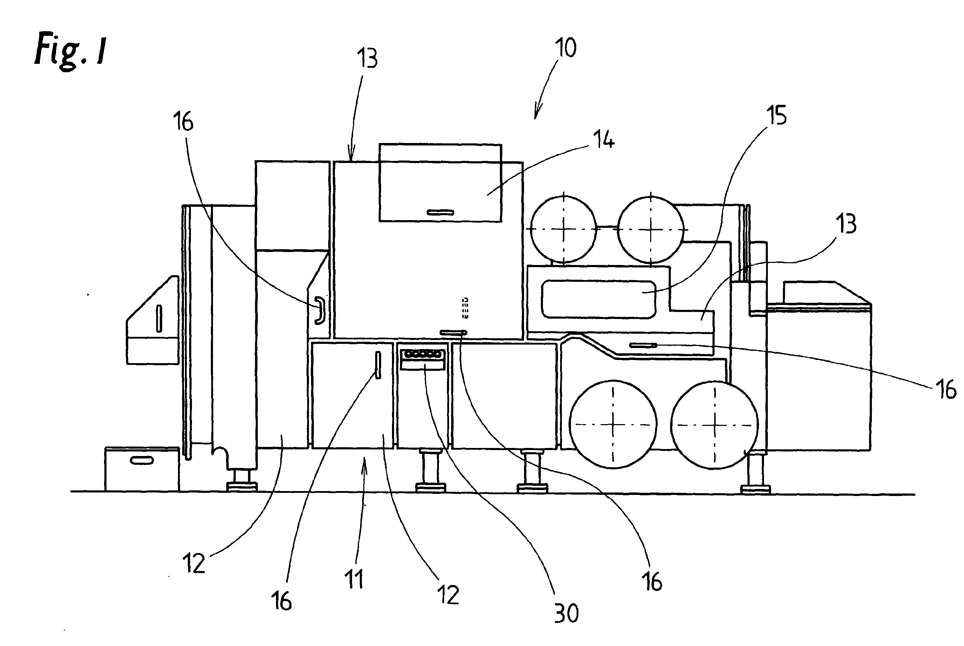

- Fig. 1: eine (Verpackungs-)Maschine in schematischer Seitenansicht,
- Fig. 2: einen Teilbereich einer Verkleidung der Maschine, nämlich eine schwenkbare Abdeckhaube, im Querschnitt,
- Fig. 3: eine Einzelheit der Darstellung in Fig. 2 in vergrößertem Maßstab,
- Fig. 4: einen Handgriff mit einem Teilbereich einer Verkleidung im Horizontalschnitt, bei nochmals vergrößertem Maßstab,

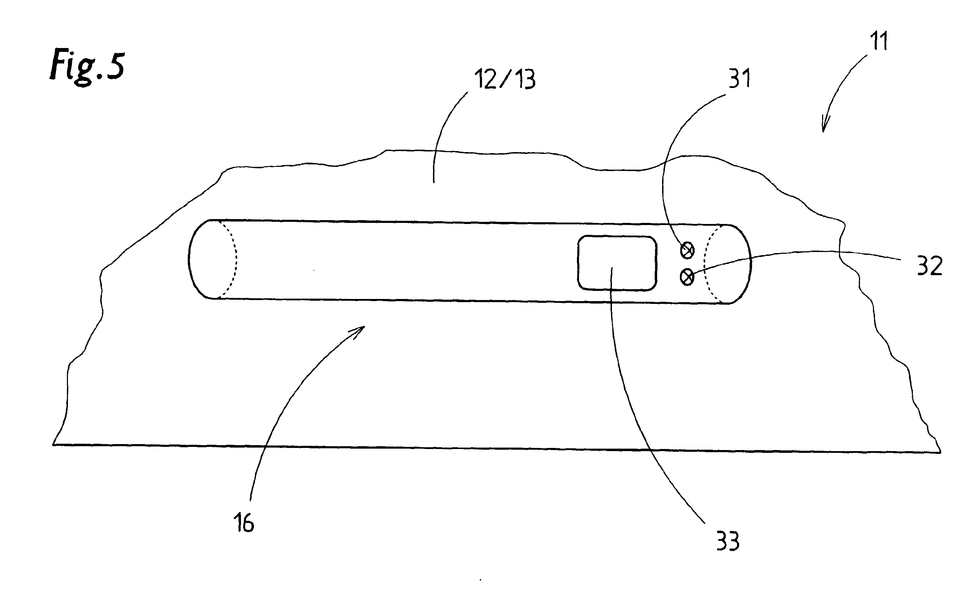

- Fig. 5: eine andere Ausführungsform eines Handgriffs in Ansicht.

Die in den Zeichnungen dargestellten Einzelheiten betreffen eine Verpackungsmaschine 10, und zwar für die Fertigung von Zigarettenpackungen des Typs Klappschachtel. Die Verpackungsmaschine 10 ist in bekannter Weise ausgebildet, nämlich mit Faltaggregaten versehen (Faltrevolver) und mit weiteren Verpackungsorganen. Die Verpackungsmaschine 10 ist in Teilbereichen mit einer äußeren Verkleidung 11 versehen. Diese ist in unterschiedliche Bereiche aufgeteilt, besteht nämlich aus festmontierten Verkleidungsteilen und bewegbaren oder gar abnehmbaren. Es handelt sich dabei um Türen 12, Klappen, Hauben 13, Teilhauben 14 etc. Die Türen 12 sind vorzugsweise aus Blech bestehender Teil der Verkleidung 11, während die Hauben 13 und Teilhauben 14 ganz oder teilweise aus Kunststoff, zum Beispiel Acrylglas, bestehen. Die Hauben 13 können auch aus Metall, also Blech bestehen mit Fenstern 15 aus Kunststoff.

Jedes dieser beweglichen Teile der Verkleidung 11, also Türen 12, Hauben 13, Teilhauben 14, sind mit mindestens einem Handgriff 16 versehen. Dieser Handgriff 16 wird zum Betätigen des betreffenden Teils der Verkleidung 11, also zum Öffnen einer Tür 12 oder zum Abheben einer Haube 13, erfaßt.

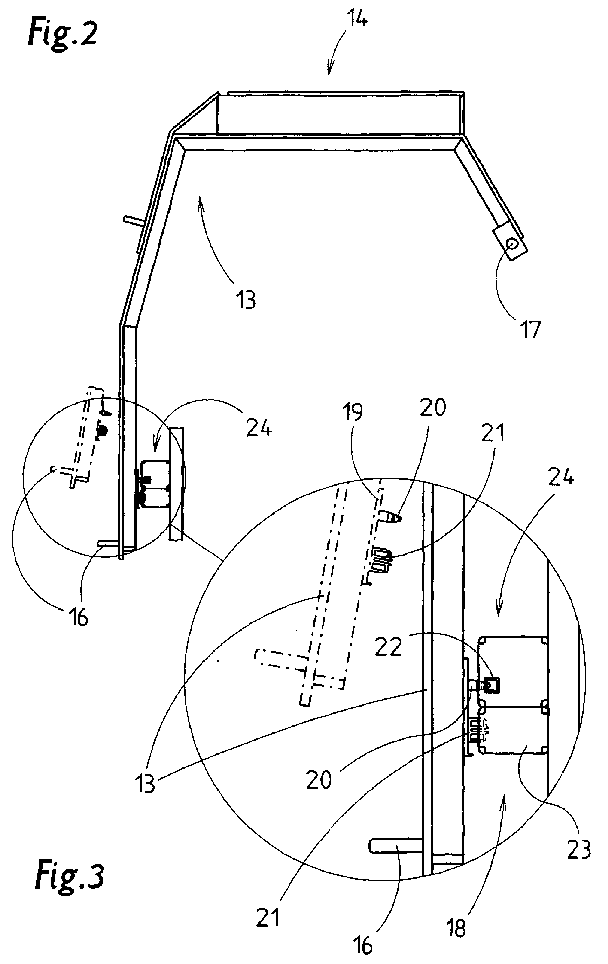

Die beweglichen bzw. abnehmbaren Teile der Verkleidung 11, also Türen 12, Hauben 13, 14, sind in der Schließ- bzw. Montagestellung verriegelt. Fig. 2 zeigt als Beispiel die Haube 13, die die Verpackungsmaschine 10 als Teil der Verkleidung 11 vorn, oberseitig und rückseitig abdeckt. Im Bereich der Rückseite ist die Haube 13 mit einem Scharnier 17 schwenkbar gelagert. Auf der vom Scharnier 17 abliegenden vorderen Seite ist der Handgriff 16 angebracht. Des weiteren ist in diesem Bereich innenseitig an der Verkleidung bzw. an der Haube 13 eine Verriegelung 18 vorgesehen. Diese kann in herkömmlicher Weise ausgebildet sein bzw. besteht aus handelsüblichen Beschlagteilen. Es handelt sich dabei um eine an der Haube 13 angebrachte Beschlagplatte 19 mit einem Verriegelungsbolzen 20 und einem Schaltkontakt 21. Der Verriegelungsbolzen 20 tritt in Schließstellung in ein mit der Maschine verbundenes Verankerungsteil 22 ein. Der Verriegelungsbolzen 20 wird in dieser Stellung (Fig. 3) fixiert. Der Schaltkontakt 21 ist mit einer Schalteinheit 23 verbunden. Diese bildet zusammen mit einer Halbierung für den Verankerungsteil 22 einen fest mit der Maschine verbundenen Gegenbeschlag 24.

Zum Öffnen der betreffenden Tür 12, Haube 13 oder dergleichen wird über den Schaltkontakt 21 und die Schalteinheit 23 ein Signal erzeugt, welches den Maschinenstopp auslöst. Wenn die Maschine vollständig zum Halten gekommen ist, wird der Verriegelungsbolzen 20 im Verankerungsteil 22 freigegeben und die Tür 12 oder Haube 13 kann geöffnet werden.

Das Halte- bzw. Stoppsignal wird durch ein Schaltorgan 25 ausgelöst, welches mit dem Handgriff 16 verbunden ist. Es handelt sich dabei um einen von Hand zu betätigenden Druckbügel 26, der gegen die Belastung von Federn 27 bewegbar am Handgriff 16 angeordnet ist. Das Schaltorgan 25 befindet sich an der Innenseite des Handgriffs 16, auf der der Tür 12 bzw. Haube 13 zugekehrten Seite. Das Schaltorgan 25 wird demnach automatisch beim Erfassen des Handgriffs 16 betätigt.

Durch die Bewegung des Druckbügels 26 unter Zusammendrücken der Federn 27 werden innerhalb des Handgriffs 16 angeordnete Schalter 28 betätigt. Es handelt sich bei diesen um Druckschalter, die unmittelbar bei Anlage des Druckbügels 26 den Kontakt herstellen und damit das Signal für den Maschinenstopp auslösen. Nach wenigen Sekunden ist die Tür 12 bzw. Haube 13 entriegelt und kann geöffnet werden.

Ein elektrisches Kabel 29 führt von den Schaltern 28 innerhalb des entsprechend hohl ausgebildeten Handgriffs 16 zu den Schaltkontakten 21.

Der Handgriff 16 mit dem Schaltorgan 25 kann, wie dargestellt, U-förmig ausgebildet sein, aber auch winkelförmig, wobei das Schaltorgan 25 jeweils an der Innenseite positioniert ist.

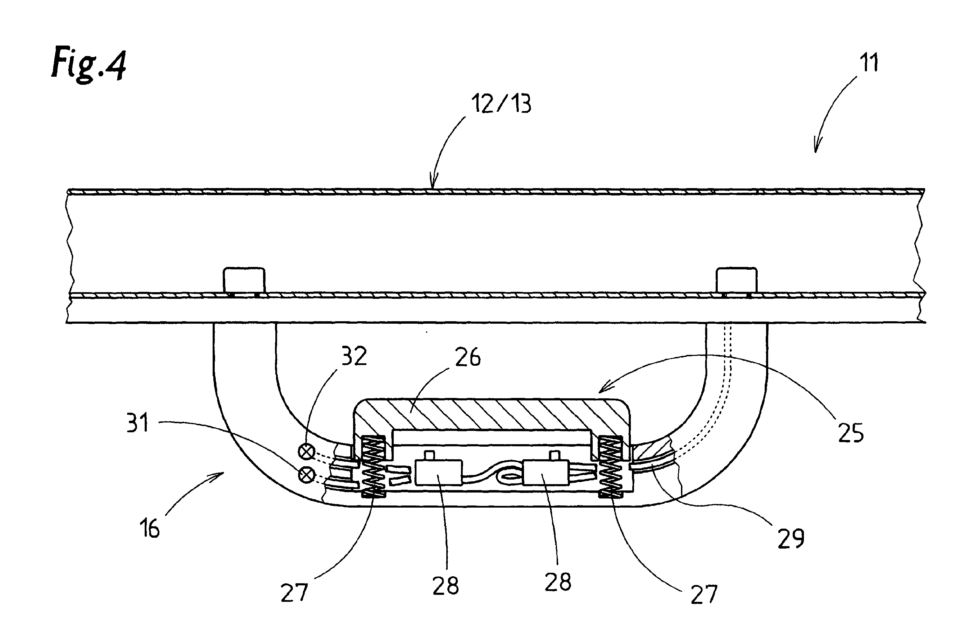

Da zwischen dem Betätigen des Schaltorgans 25 bzw. eines (anderen) Schalters und dem Stillstand der Maschine bzw. der betreffenden Tür 12, Haube 13, Teilhaube 14 oder dergleichen eine gewisse Zeit vergeht, beispielsweise bis zu 3 sec., wird dem Bediener die Entriegelung durch ein Signal angezeigt, und zwar durch ein Licht- bzw. Leuchtsignal. Bei dem Ausführungsbeispiel der Fig. 4 sind am Handgriff 16 zwei Lichtquellen angebracht, nämlich zum Beispiel Dioden 31, 32. Diese sind über elektrische Leitungen mit den Schaltern 28 bzw. mit dem Kabel 29 verbunden. Die eine Diode 31 erzeugt beispielsweise ein rotes Lichtsignal und die andere Diode 32 ein grünes Lichtsignal. Während der Verriegelung der zu öffnenden Teile leuchtet die Diode 31, wird mithin ein rotes Signal erzeugt. Sobald das betreffende bewegbare Teil entriegelt ist, also geöffnet werden kann, leuchtet die (grüne) Diode 32 auf, während die Diode 31 erlischt.

Der Handgriff 16 kann zur weiteren Verbesserung bzw. Erhöhung der Sicherheit mit einem wasserdichten Schalter 33 versehen sein. Dieser ist so ausgebildet, daß in einer Vertiefung des beispielsweise im Querschnitt runden Handgriffs 16 bzw. innerhalb eines hohlen Handgriffs 16 Schalter angeordnet sind, die von Hand betätigt werden können. Die Schalter sind außen im Bereich der Ausnehmung bzw. einer Öffnung durch eine wasserdichte Folie aus elastischem Werkstoff abgedeckt. Die Folie ist so angeordnet, daß die Ausnehmung dicht verschlossen ist. Damit liegen die Schalter bzw. Schaltorgane in einem wassergeschützten Bereich. Die Dioden 31, 32 sind analog zu dem Ausführungsbeispiel der Fig. 4 neben dem Schalter 33 angeordnet.

Bei dem gezeigten Ausführungsbeispiel ist die Haube 13 mit einer Teilhaube 14 versehen. Diese ist in einem Bereich angeordnet, der für das Bedienungspersonal oder für den Betrieb der Maschine ungefährlich ist. Diese Teilhaube 14 kann demnach ohne die beschriebene Sicherung, geöffnet werden.

Die Verpackungsmaschine 10 ist zusätzlich in üblicher Weise mit einem Schaltpult 30 versehen, an dem ein Schalter für ein Notaus der Verpackungsmaschine angeordnet ist und zusätzlich ein üblicher Schalter für einen Maschinenstopp.

Die beschriebene Sicherung von Türen, Hauben etc. kann auch bei den einer Verpackungsmaschine zugeordneten Nebenaggregaten, (Schalt-)Schränken etc. verwendet werden.

### Bezugszeichenliste:

- 10: Verpackungsmaschine
- 11: Verkleidung
- 12: Tür
- 13: Haube
- 14: Teilhaube
- 15: Fenster
- 16: Handgriff
- 17: Scharnier
- 18: Verriegelung
- 19: Beschlagplatte
- 20: Verriegelungsbolzen
- 21: Schaltkontakt
- 22: Verankerungsteil
- 23: Schalteinheit
- 24: Gegenbeschlag
- 25: Schaltorgan
- 26: Druckbügel
- 27: Feder
- 28: Schalter
- 29: Kabel
- 30: Schaltpult
- 31: Diode
- 32: Diode
- 33: Schalter

## Patentansprüche

1. Maschine, insbesondere Verpackungsmaschine, bei der mindestens Teilbereiche mit einer äußeren Verkleidung (11) versehen sind, wobei die Verkleidung (11) abnehmbare bzw. in eine Öffnungsstellung bewegbare Verkleidungsteile aufweist, insbesondere Türen (12), Hauben (13) und/oder Klappen, die den Zugang zu Teilen der Maschine ermöglichen, und wobei die Verkleidungsteile einen Handgriff (16) aufweisen, mit einem vom Bediener der Maschine zu betätigendem Schaltorgan (25), welches zum Öffnen der Verkleidungsteile zu betätigen ist und einen Maschinenstopp auslöst, und wobei das Schaltorgan (25) beim Erfassen des Handgriffs (16) betätigbar ist, **gekennzeichnet durch** folgende Merkmale:
a) der Handgriff (16) ist bügelförmig ausgebildet, mit einer im Wesentlichen U-förmigen Gestalt,
b) die Verkleidungsteile sind bis zum Stillstand der Maschine in einer Schließstellung verriegelt,
c) bei Stillstand der Maschine ist **durch** am Handgriff (16) angeordnete Lichtquellen ein für den Bediener sichtbares optisches Signal erzeugbar.

2. Maschine nach Anspruch 1, **dadurch gekennzeichnet, dass** das betätigbare Schaltorgan an der Innenseite des Handgriffs (16) angeordnet ist.

3. Maschine nach Anspruch 2, **dadurch gekennzeichnet, dass** das Schaltorgan (25) am Handgriff (16) einen gegen elastischen Druck bewegbaren Druckbügel (26) aufweist, der mindestens einen im Handgriff (16) angeordneten Schalter (28) betätigt, wobei der Schalter (28) ein elektrisches Signal erzeugt zum Abschalten der Maschine.

4. Maschine nach Anspruch 1, oder einem der weiteren Ansprüche, **dadurch gekennzeichnet, dass** die Verkleidungsteile, insbesondere Türen (12), Hauben (13) etc. durch Verriegelungsorgane in der Schließstellung verriegelt sind, insbesondere durch Verriegelungsbolzen und dass eine Freigabe der Verriegelungsbolzen erst bei Stillstand der Maschine erfolgt.

5. Maschine nach Anspruch 4, **dadurch gekennzeichnet, dass** das Signal bei Entriegelung der Verkleidungsteile erzeugt wird

6. Maschine nach Anspruch 5, **gekennzeichnet durch** zwei Lichtquellen, insbesondere Leuchtdioden, unterschiedlicher Farbe, wobei eine Diode (31) bei verriegeltem Verkleidungsteil und die andere Diode (32) bei entriegeltem Verkleidungsteil aufleuchtet.

7. Maschine nach Anspruch 1, oder einem der weiteren Ansprüche, **dadurch gekennzeichnet, dass** das vom Bediener der Maschine zu betätigende Schaltorgan (25), insbesondere im Handgriff (16) angeordnete Schalter (28), nach außen wasserdicht durch eine elastische Abdeckung abgedeckt sind.

## Claims

1. Machine, in particular packaging machine, at least subregions of which are provided with an outer casing (11), the casing (11) having casing parts which can be removed or moved into an opening position, in particular doors (12), shrouds (13) and/or flaps, which allow access to parts of the machine, and the casing parts having a handle (16) with a switching element (25) which can be actuated by the machine operator for the purpose of opening the casing parts and triggers a machine stoppage, and it being possible for the switching element (25) to be actuated when the handle (16) is gripped, **characterized by** the following features:
a) the handle (16) is of bracket-like design with an essentially U-shaped configuration,
b) the casing parts are locked in a closed position until the machine comes to a standstill,
c) when the machine is at a standstill, an optical signal which is visible to the operator can be generated by light sources arranged on the handle (16).

2. Machine according to Claim 1, **characterized in that** the actuable switching element is arranged on the inside of the handle (16).

3. Machine according to Claim 2, **characterized in that** the switching element (25) on the handle (16) has a pressure-exerting bracket (26) which can be moved counter to elastic pressure and actuates at least one switch (28) arranged in the handle (16), the switch (28) generating an electric signal for switching off the machine.

4. Machine according to Claim 1 or one of the further claims, **characterized in that** the casing parts, in particular doors (12), shrouds (13), etc., are locked in the closed position by locking elements, in particular by locking bolts, and **in that** the locking bolts are only released when the machine is at a standstill.

5. Machine according to Claim 4, **characterized in that** the signal is generated when the casing parts are unlocked.

6. Machine according to Claim 5, **characterized by** two light sources, in particular light-emitting diodes, of different colours, one diode (31) lighting up when the casing part is locked and the other diode (32) lighting up when the casing part is unlocked.

7. Machine according to Claim 1 or one of the further claims, **characterized in that** the switching element (25) which can be actuated by the machine operator, in particular switches (28) arranged in the handle (16), is/are covered in a watertight manner in the outward direction by an elastic covering.

## Revendications

1. Machine, en particulier empaqueteuse, dont au moins des parties sont pourvues d'un habillage extérieur (11), cet habillage (11) présentant des parties amovibles ou pouvant être mises dans une position ouverte, en particulier des portes (12), des capots (13) et/ou des volets, qui permettent l'accès à des parties de la machine, et les parties de l'habillage présentant une poignée (16) ayant un organe de coupure (25) à manoeuvrer par l'opérateur de la machine qui doit être manoeuvré pour l'ouverture des parties de l'habillage et déclenche l'arrêt de la machine, et l'organe de coupure (25) pouvant être manoeuvré lors de la saisie de la poignée (16), **caractérisée par** les caractéristiques suivantes :
a) la poignée (16) est recourbée sensiblement en forme de U,
b) les parties de l'habillage sont, jusqu'à l'arrêt de la machine, verrouillées dans une position fermée,
c) à l'arrêt de la machine, des sources lumineuses placées sur la poignée (16) permettent de produire un signal optique visible de l'opérateur.

2. Machine selon la revendication 1, **caractérisée par le fait que** l'organe de coupure manoeuvrable est placé sur le côté intérieur de la poignée (16).

3. Machine selon la revendication 2, **caractérisée par le fait que** l'organe de coupure (25) situé sur la poignée (16) présente un étrier à presser (26) mobile contre une pression élastique et qui actionne au moins un interrupteur (28) placé dans la poignée (16), cet interrupteur (28) produisant un signal électrique pour arrêter la machine.

4. Machine selon la revendication 1 ou une des autres revendications, **caractérisée par le fait que** les parties de l'habillage, en particulier des portes (12), des capots (13), etc., sont verrouillées en position fermée par des organes de verrouillage, en particulier par des tiges de verrouillage, et que le déblocage de ces tiges a lieu seulement à l'arrêt de la machine.

5. Machine selon la revendication 4, **caractérisée par le fait que** le signal est produit lors du déverrouillage des parties de l'habillage.

6. Machine selon la revendication 5, **caractérisée par** deux sources lumineuses, en particulier des diodes lumineuses, de couleurs différentes, une diode (31) étant allumée lorsque la partie d'habillage est verrouillée et l'autre diode (32) étant allumée lorsque la partie d'habillage est déverrouillée.

7. Machine selon la revendication 1 ou une des autres revendications, **caractérisée par le fait que** l'organe de coupure (25) manoeuvré par l'opérateur de la machine, en particulier l'interrupteur (28) placé dans la poignée (16), est pourvu d'une couverture élastique imperméable à l'eau.
